# EUROPEAN PATENT SPECIFICATION

(11) **EP 0 406 803 B1**
(45) Date of publication and mention of the grant of the patent: **01.06.1994**
(21) Application number: 90112689.6
(22) Date of filing: 03.07.1990
(51) Int. Cl.: A01G 31/02

(54) **A method for hydroponical growing of plants as well as a growing device and a system for the practicing of said method**
Verfahren für die Hydrokultur von Pflanzen sowie Wachstumsvorrichtung und System zur Ausführung dieses Verfahrens
Méthode pour la croissance hydroponique de plantes ainsi que dispositif de croissance et système pour pratiquer cette méthode

(30) Priority: 03.07.1989 EP 89112131
(43) Date of publication of application: 09.01.1991
(73) Proprietor: BENTLE PRODUCTS AG, CH-6301 Zug (CH)
(72) Inventor: Ahm, Poul Henrik, E-03590 Altea (Alicante) (ES)
(74) Representative: Liska, Horst, Dr.-Ing.

(56) References cited:
- EP-A- 406 458
- EP-A- 0 042 697
- FR-A- 2 046 458
- US-A- 3 744 183

## Description

The present invention relates to a method for hydroponical growing of plants as well as a growing device and a system for the practicing of said method.

Various methods, devices and systems of this kind have been developed through the time. All of the said methods and devices have, however, been based on functions and constructions leaving the plant roots either immersed in the nutrient solution, such as e.g. disclosed in US-PS 3,739,522, or surrounded by a growth medium from time to time saturated with nutrient solution, e.g. by dipping said medium in the nutrient solution, such as disclosed in US-PS 4,118,891. In either situation, the exchange of nutrient solution around the roots is rather slow. As a result the supply of nutrients and oxygen to the roots as well as the removal of waste products from the roots is inadequate so that the conditions for the growth of the plant is unsatisfactory.

Experiments have shown that one of the decisive factors in the efforts of optimizing the growth of plants is that the conditions for the roots in taking up the water and exchanging of the neccessary amounts of nutrients and oxygen with waste products is as favourable as possible so as to minimize the stressing of the plants. Further, said experiments have shown that these conditions are favoured by a constant high percentage of relative humidity and oxygen accessible for the roots together with the maintenance of a steady but low concentration of the nutrients necessary in a accessible form and a lowest possible concentration of waste products including waste salts. From said experiments it also appears that even very low concentrations of the nutrients could still be adequate as long as the concentrations are still maintained at a level sufficient to secure the desired uptake of the nutrients necessary.

Consequently, a continuous and fast exchange of the nutrient solution around the roots is of the greatest importance in order to ensure a fast removal of waste products and a steady supply of fresh nutrients of the composition and concentration required at the same time as it provides for a high percentage of oxygen accessible to the roots. The main advantage resulting in carrying out a continuous and fast exchange of nutrient solution around the roots is the possibility of minimizing the concentrations of nutrient salts and waste salts around the roots, thereby reducing the osmotic pressure outside the roots, which osmotic pressure is counteracting the uptake of water, at the same time as the necessary nutrient salts are still provided.

In DK patent application no. 4420/79, filed on October 19, 1979, a method and a device to overcome this problem is disclosed, wherein a porous growth substrate surrounded by a plastic film in form of a bag is used for developing the roots of a single plant in that the growth substrate is continuously supplied with water containing the additives necessary for the growth of the plant, and whereby the water is collected from below the bottom of the bag and recirculated. As well the production of said device as the mounting thereof in a system including a greater number of said devices is rather time-comsuming and therefore relatively costly.

EP-A-0042697 discloses a plant growing unit being formed of flexible plastic material and comprising an upper plant root-ball container being open upwards and a lower reservoir for nutrient solution. The walls of said reservoir have apertures for establishing a maximum level of nutrient solution and a ventilated air space above the nutrient solution. Openings between the container and the reservoir may allow root growth from the container to the reservoir. A wick of capillary material can be inserted to bridge the space between the upper root-ball container and the nutrient solution in the reservoir. The unit might be suspended on a wire, and the nutrient solution may be added on a continuous basis from a drip irrigation pipe in the root-ball container.

The object of the present invention is to disclose an improved and simplified method for simultaneously growing several plants as well as a growing device and a system for practicing of said method.

The inventive method comprises the steps of:
- inserting a drip irrigation pipe having outlets disposed along the length thereof in between a pair of flatwise juxtaposed layers of water-impervious material of a plant growing device alongside a first longitudinal edge thereof,
- suspending said drip irrigation pipe and said growing device on at least one suspension means placed in a substantially horizontal level with said first longitudinal edge and said pipe disposed adjacent said at least one suspension means, and the remaining part of the plant growing device hanging from said suspension means,
- placing the roots of a number of plants in between said two juxtaposed layers of the growing device, the roots of each plant being disposed downstreams of one of said outlets,
- continuous feeding of nutrient solution through said drip irrigation pipe and said outlets and guiding it to the roots of each plant, and it characterized by
   using a plant growing device being closed at said first longitudinal edge and having minor spaced throughcuts through at least one of the layers close to said first closed longitudinal edge, each of said throughcuts being adapted for the insertion of the roots of a plant and with the stem of the plant extending through the throughcut, and
- allowing said nutrient solution quickly to percolate along the roots of the plants and taking out and collecting percolated excess nutrient solution from below the roots for recirculation or discharge thereof, thereby generating optimal conditions for the roots, including the maintenance of a very thin film of percolating fresh nutrient solution having a low concentration of nutrient salts and waste products on the roots, said film being surrounded by an atmosphere having a nearly 100% relative humidity and a high content of oxygen.

By this indicated method a quick exchange and percolation of the nutrient solution are obtained inside an almost completely closed root compartment, whereby the control of the root-environments is very easily carried out, and the depositing of salts at any place of the plant roots is avoided, and which is well suited for the simultaneous growing of several plants under equal and constant conditions.

Preferably, this method is characterized by the use of a nutrient solution having a carefully controlled concentration of nutrients well below 2 per thousand, and by feeding nutrient solution in the amount of at least 0.1 l/h for each plant, preferably at least 0.25 l/h for each plant, whereby an extremely rapid growth of the plants is usually obtained.

In using a very simple growing device comprising a flattened tubing suspended on a suspension means the upper part of said growing device is placed sloping proportional to the vertical plane containing the suspension means by means of a longitudinal displacement means. Thereby, in an initial phase of the growth, a good contact between the roots and the nutrient solution is ensured. In order to establish said sloping a displacement means, i.e. a wire, could be suspended below and sidewise displaced of the suspension means for the growing device, thereby supporting the upper part of the growing device in a sloping way.

The collection of percolated nutrient solution is simplified by using a flattened plastic tubing being closed alongside the bottom edge as well as alongside the top edge except for a discharge opening at the lowest point of the bottom edge.

In using a growing device having said pair of flatwise juxtaposed layers sealed together in intermediate lines or zones spaced in the longitudinal direction of the said layers and forming a series of transverse passageways between said zones for the passage of nutrient solution and development of the roots, a good contact between the roots and the nutrient solution is obtainable, even with a freely hanging growing device.

In using a flattened plastic tubing, each closed longitudinal edge thereof being provided with a drip irrigation pipe alongside the length thereof, each closed edge and each pipe being suspended on a separate suspension means the intermediate part of the growing device sacking therebetween, the nutrient solution being fed through each of said drip irrigation pipes and upon percolation towards the middle of the growing device taken out through a discharge opening therein, a very favourable method of growing minor plants, such as lettuce, strawberries, beans, and a number of cut flowers, is obtained in which the plants could be placed all over the top surface of the growing device.

The inventive growing device comprises
- a windable length of a pair of flatwise juxtaposed layers of water-impervious material forming first and second longitudinal edges
- the two layers being interconnected at least along said first longitudinal edge and being adapted for insertion of a drip irrigation pipe having outlets disposed along the length thereof in between said layers alongside said first longitudinal edge, said layers and said pipe further being adapted for suspension on a substantially horizontal suspension means alongside said first interconnected edge and is
   characterized by
   said windable length of layers being closed at said first interconnected edge,
- at least one of said two layers having minor throughcuts spaced along the length thereof and close to said first edge,
   each of them for the insertion of the roots of a plant adapted to have the stem of the plant extended through the throughcut,
- said length further being provided with a discharge opening for percolated nutrient solution at the bottom thereof.

It is to be stressed that no growing substrate at all is to be inserted between the two layers, and that, consequently, a very cheap growing device for simultaneous growing of a number of plants is obtained.

A preferred embodiment of the growing device of the invention is characterized by
- said length being a flattened tubing of plastic film, with the second longitudinal edge thereof being closed and
- the discharge opening being provided at the lowest point of said second closed longitudinal edge.

A further preferred embodiment of the invention is characterized by said two layers being sealed in sealing zones, having the form of dots or rings or straight or curved lines and being spaced along the longitudinal direction of said layers, said sealing zones leaving longitudinally free passageways alongside said first and second edges and forming a series of successive transverse passageways open to said two longitudinally extending passageways, said transverse passageways having a substantially flat cross-section, said growing device especially being advantageous for use in a vertically suspended position, in which a good contact between the roots and the nutrient solution is still ensured.

A further advantageous embodiment of the inventive growing device is characterized by comprising
- a windable length of a pair of flatwise juxtaposed layers of water-impervious material,
- said two layers being interconnected along a first longitudinal edge thereof, and
- said two layers further being sealed along sealing lines extending transverse to and spaced along the longitudinal direction of the length,
- and where each of said transverse sealing lines extends between a first point located some distance away from the first edge and a second point located some distance away from the opposing second longitudinal edge of said layers,
- said sealing lines thereby leaving a free longitudinal passageway extending along the length of said first edge and forming a series of successive, transverse passageways separated from each other by the transverse sealing lines and open to the longitudinal passageway at the first edge and to the second edge,
- said transverse passageways having a substantially flat cross-section.

The resulting device is usable for simultaneously growing several plants, and is advantageous in that a series of transverse passageways, each for the growth of one plant and for the percolation of nutrient solution therethrough is provided, thereby minimizing the risk of spreading of disease between the roots.

Another preferred embodiment of the growing device of the invention is characterized by
- a windable, collapsed plastic tubing, its pair of flatwise juxtaposed layers being interconnected along opposing first and second longitudinal, closed edges, respectively, of said collapsed tubing,
- said two flatwise juxtaposed layers of the collapsed tubing further being sealed along transverse sealing lines extending transverse to and spaced along the longitudinal direction of the length of the tubing,
- and where each of said transverse sealing lines extends between a first point located some distance away from the first closed edge and a second point located some distance away from the opposing second closed edge of the collapsed tubing,
- said sealing lines thereby leaving free longitudinal passageways, each extending along the length of a respective one of said closed edges of the collapsed tubing and forming a series of successive, transverse passageways separated from each other by the transverse sealing lines and open to both of said longitudinal passageways.

This embodiment is very advantageous, as it is inexpensive and moreover has a further longitudinal passageway for the collection and passing-on of excess nutrient solution from all the transverse passageways.

The said growing device is intended for use without any growth substrate therein and in a vertically suspended position with the transverse passageways extending in a vertical plane. As a result a fast percolation of fresh nutrient solution through each transverse passageway is obtained, thus attaining optimum and uniform conditions for the growth of each plant.

The said device is of simple construction and inexpensively manufactured, as it is preferably made by simply welding together of a continuously blown plastic tube along the transverse sealing lines followed by separating the tube into tubings of a length suitable for the purpose of the topic. Furthermore, the device is easy to instal and to use, thereby minimizing the total cost of growth of the plants. The said device may also be made of one or more lengths of plastic film put together in a flatwise juxtaposed position or of other bendable materials impervious to water, such as waterproof paper or other waterproof fibrous fabrics. The interconnections and sealings may be carried out in any known way. The material used is preferably of a type impenetrable to light. More preferably the material is of a light-reflecting type thereby minimizing the amount of heat collected in the growing device. In an advantageous embodiment of the growing device according to the invention the tubing may also comprise a heat-insulating material, such as a foamed or otherwise formed cellular film material, thereby reducing the heat transfer through the tubing and obtaining an economic use of heated nutrient solution.

A further preferred embodiment of the growing device of the invention is characterized by
both of said longitudinal edges being closed and the length of the two layers being adapted for insertion of a drip irrigation pipe at each edge, and for suspension with said pipes on substantially horizontal suspension means alongside each edge,
- said two layers being sealed along two parallel longitudinal rows of sealing zones, each sealing zone in a row extending between a first point located some distance away from a closed edge of the length, and a second point located further away from said closed edge and some distance away from the centre line of the length and on the same side thereof as said first point,
- said rows of sealing zones thereby leaving free longitudinal passageways each extending along the length of a respective one of said closed edges and a free longitudinal, central passageway extending between said two parallel rows of sealing zones, said two rows further forming two series of successive, transverse, flat passageways separated from each other by the sealing zones and each open to a corresponding longitudinal, outer passageway and to the longitudinal, central passageway, the discharge opening being provided at the lowest point of th central passageway.

This embodiment is particularly suitable for outdoor growing of plants, as it is very easily mounted in a stable position so that the growing device can resist wind action. Depending on preselected arrangements, this embodiment moreover allows rainwater either to be collected and integrated in the growing system or to be discarded when needed. Depending on the culture grown, it is furthermore possible to grow an increased number of plants per unit length of the growing device without requiring a corresponding larger area of access to the plants by simply placing more plants along the length of each transverse passageway.

The sealing zones dividing up in transverse passageways have a simple geometric form, such as dots, rings or straight or curved lines extending perpendicular to, inclined to or parallel with the longitudinal direction of the length or tubing.

An embodiment of the growing device having two parallel rows of sealing zones, which is of particular interest from a manufacturing point of view is characteriszed in that the sealing zones of the two rows are formed as lines inclined to the longitudinal direction of the tubing in a substantially symmetrical way with respect to the centre line. Thus the two sides of the growing device display the same properties during production as well as in use of the system.

In one embodiment of the inventive device having transverse sealing lines the transverse sealing lines are straight lines inclined at an acute angle of between 0° and 90°, preferably between 0° and 45°, most preferably about 10°, to the longitudinal direction of the device, thereby maintaining a relatively quick percolation of the nutrient solution through the transverse passageways, when the device is suspended with the transverse passageways oriented in a substantially vertical plane. In order to maximise the growing place left above the device within a predetermined level, e.g. inside the roof of a greenhouse, the angle should be as small as possible, whereby the height of the device between the upper and the lower, longitudinal edges thereof is as low as possible for a given length of the transverse passageways.

Depending on the type of plants grown, different proportions between the length and the width of the transverse passageways are recommended. For most purposes, however, it is satisfactory that the dimension of the transverse passageway from one longitudinal passageway to the other is about 3-5 times the dimension of the transverse passageway in the longitudinal direction of the device.

The choice of width of the longitudinal passageways between the closed edges of the tubing and the row of sealing zones depends on the manner of supplying the nutrient solution, for instance on the dimension of the supply pipes to be used, and on the space necessary for the roots and for the collection and outlet of the percolated water. For most purposes, however, it is satisfactory, that the sealing zones extends between a distance of about 20-80 mm away from a first closed edge of the layers of the collapsed tubing. On the other hand, a considerably greater distance from the second edge or the centre line of the layers or tubing may also be desirable, for instance 80-300 mm.

While the above simple form of the growing device functions quite satisfactory in most cases, it is occasionally advantageous to provide the growing device with additional longitudinal sealings along longitudinally extending sealing lines, each additional sealing extending from the end of a transverse sealing line at the first point towards a neighbouring, sealing zone to a point close to said neighbouring, sealing zone and to the adjacent longitudinal passageway, said additional sealings thereby being gently inclined to the inside of the adjacent transverse passageways and leaving a passage from the adjacent longitudinal passageway to each of said transverse passageways for the inlet of nutrient solution therein.

This applies especially for devices having very wide transverse passageways separated by sealing zones extending perpendicular to the longitudinal direction of the device. The above arrangement ensures a correct delivery of the supplied nutrient solution to the area of the inserted roots. Any nutrient solution supplied by a supply pipe in the area of a transverse passageway between two adjacent sealing zones is transferred to said transverse passageway through the passage left by the additional, gently inclined, sealing line. Consequently it is easier to place the plant in such a way that the supply of nutrient solution arrives at the area of the inserted roots.

It is worth underlining that the growing device is used completely without any kind of growing substrate inside the device, thereby eliminating all costs and other disadvantages therefrom. Moreover, storing and shipping costs are thus kept at a minimum. In addition all of the growing device as well as the plant material is burnable after use upon a short air-drying period.

According to a further feature of the invention the growing device is initially provided with a minor throughcut through at least one of the layers of the growing device at the end of each transverse passageway close to the longitudinal passageway at the first edge or to the longitudinal outer passageways, respectively, for insertion of a plant and, according to another feature, with at least one opening to the outside from the longitudinal passageway at the second closed edge of the device or the longitudinal central passageway, respectively, for the outlet of excess nutrient solution, thus expediting the correct mounting of the growing device. The throughcuts and openings can be provided prior to or during the mounting of the growing device.

A further object of the invention is to provide an improved system for hydroponical growing of plants, where a high degree of functional security is achieved, simultaneous with the cost of initial expenditure as well as the operating costs being kept at a very low level.

The inventive system is of the kind comprising
- a collecting tank for a nutrient solution,
- a control means for continuously measuring and adjusting the content of nutrient salts and other additives necessary for the growth of plants by adding the necessary amounts of water, macrosubstances, and microsubstances to the nutrient solution,
- pumps and pipes for continuously carrying nutrient solution to the plants, and
- at least one gutter for collecting and passing-on of used, excess nutrient solution from the plants to the collecting tank.
According to the invention, the system is characterized by further comprising
- a number of inventive growing devices,
- a corresponding number of supply pipes inserted therein and of a length at least equal to the length of the growing device (10) and
- a corresponding number of
- suspension means for suspending the growing device and each inserted supply pipe in such a manner that each growing device is located above and transverse to the gutter with its lower longitudinal passageway slightly inclined downwards towards said gutter, and with the outlet thereof just above said gutter.

The entire system is very simple in its construction. Especi-ally by using supply pipes inserted in and supporting the likewise simple growing devices, a very simplified system is achieved, which is also very reliable. At the same time the mounting of the system and the insertion of the plants is performed in a very simple manner, thus saving a lot of time compared with other systems.

In an advantageous embodiment of the inventive system the suspension means comprises
- at least one suspension member, such as a cord or a wire stretched between at least two posts, and optionally
- gripping means gripping around the suspension member and the upper part of the growing device holding the supply pipe at suitable places along the length thereof, thereby fastening the growing device to the suspension member,
- said suspension member being positioned at a level sufficient for keeping the bottom of the growing device just above the top of the gutter.

As a result the growing device is kept at a correct position by the suspension member without subjecting the supply pipe to stresses. Moreover, the growing device with supply pipe is easily mounted at or removed from the suspension member.

In a further advantageous embodiment of the inventive system
- the suspension means comprises two parallel wires, tightly stretched between two posts and kept close to each other on either side of the growing device beneath the supply pipe inserted therein, and
- the suspension means further comprises gripping means, such as hooks, inserted under the wires and the supply pipe and suspended by strings fastened to a mounting means above the growing device,
- thereby supporting the growing device and the plants inserted therein,
- the top of said plant being fastened to the string.

The use of this construction enables the positioning of the growing device between the two wires with the first longitudinal passageway including the supply pipe situated just above the wires. This results in a very stable suspension of the growing device. The growing device could of course also be suspended on a single wire positioned inside the upper longitudinal passageway alongside the supply pipe therein.

Despite the suspension wire or wires being tightly stretched, the wires are slightly bowed in a downward direction when loaded with the growing device. Consequently the lower, second longitudinal passageway is sloped from both ends of the growing device towards the middle, the latter being at the lowermost position. Naturally it is advantageous to place this point above the gutter and to provide the outlet from the second longitudinal passageway at this point.

When using the inventive system for growing plants subjected to wind, said system is advantageously characterized by a further supporting means supporting each growing device against being forcibly removed from the substantially vertically suspended hanging position. In this connection one embodiment of said further supporting means comprises at least one suspension member stretched between above-mentioned posts at a level above the lower longitudinal passageway, and a number of locking elements, such as hooks, clamps, straps or pins, securing the growing device to the supporting means.

Further in connection therewith anchoring means holding the growing device, such as strings, nets or tapes, may be fastened at anchoring blocks or suspension members secured below the growing device.

In a system comprising growing devices having two rows of sealing zones the suspension means advantageously comprises at least one suspension member or weighting member pressing or weighing down the central part of the growing device so that it can resist wind action. Said weighting member may advantageously be at least one sandhose placed loosely on the central part of said growing device.

In a particularly advantageous embodiment a system including a growing device with two rows of sealing zones comprises an outer plastic tubing surrounding said growing device and carried by an intermediate carrying means, said outer plastic tubing being closed at each end of the growing device thereby substantially forming a miniature greenhouse around said growing device.

The invention is described in greater detail below by means of examples of embodiments and with reference to the accompanying drawings, in which
Figure 1 is a diagrammatic, perspective side view of a central section of a preferred embodiment of the inventive growing device with an inserted supply pipe and supported by two wires suspended on posts,
Figure 2 is a sectional view along the line II-II of Figure 1,
Figure 3 is a diagrammatic side view of a section of another embodiment of the inventive growing device, and
Figure 4 is a diagrammatic perspective view of an embodiment of the inventive system including the inventive growing device.
Figure 5 is a diagrammatic perspective side view of a further embodiment of the invention including a pair of superposed layers of sheet material, and with further suspension means supporting the lower part of the device,
Figure 6 is a similar diagrammatic perspective side view of the preferred embodiment of the invention supported by a helically wound anchoring string fastened at anchoring blocks,
Figure 7 is a planar view of a mounted, symmetrically shaped, two-sided growing device,
Figure 8 is a sectional view through the growing device of Figure 7 along the line III-III,
Figure 9 is a sectional view through the growing device of Figure 7 along the line IV-IV, and
Figure 10 is a diagrammatic perspective view of a part of the two-sided growing device including an outer plastic tubing,
Figure 11 is a diagrammatic perspective view of a further alternative embodiment of the invention in a simplified form without any sealings and with a single suspension means inside the device and with a displacement means, and
Figure 12 a, b, c, d are sections of further alternative embodiments showing sealing zones having various geometric forms.

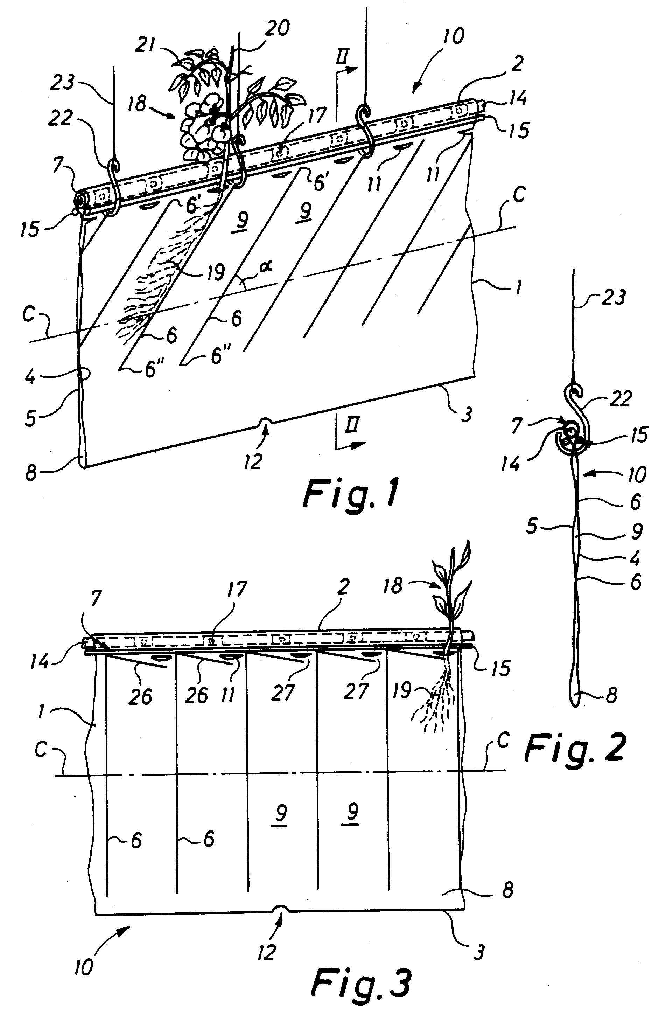

Figures 1 and 2 illustrate a preferred embodiment of the inventive growing device 10. In Figure 1 only a cut-out central section of the growing device is shown. The growing device 10 comprises a collapsed plastic tubing 1 having a first upper, closed longitudinal edge 2 and a second lower, closed longitudinal edge 3 opposing each other. The opposing two layers 4, 5 of the collapsed tubing 1 are sealed together along parallel transverse sealing lines 6 extending transversely to the tubing 1 and inclined at an acute angle α to the longitudinal direction C-C of the tubing 1. Each transverse sealing line 6 extends between two points some distance away from each of the closed longitudinal edges 2, 3, respectively, thereby forming two opposing, longitudinal free passageways 7, 8 parallel to the closed longitudinal edges 2, 3. Between the longitudinal passageways 7, 8, the tubing 1 is divided into a number of parallel, flat transverse passageways 9 separated from each other by the transverse sealing lines 6, but open at both ends to the two longitudinal passageway 7, 8 of the growing device 10.

The two opposing layers 4, 5 of the plastic tubing 1 lie flat upon each other. At first the transverse passageways 9 and the longitudinal passageways 7, 8 are completely empty so that the growing devices can assume the form of a coiled-up, endless tube (not shown). The tube can be provided with perforated lines (not shown) to facilitate the separation into suitable lengths of tubing 1, each length forming an individual growing device 10. At the top of each transverse passageway 9 a minor throughcut 11 is made in the layer 4 of the growing device 10, said throughcut enabling the insertion of the roots of a plant into the transverse passageway 9.

At the middle of the lower, longitudinal edge 3 an opening 12 is provided acting as an outlet for excess nutrient solution from the growing device 10.

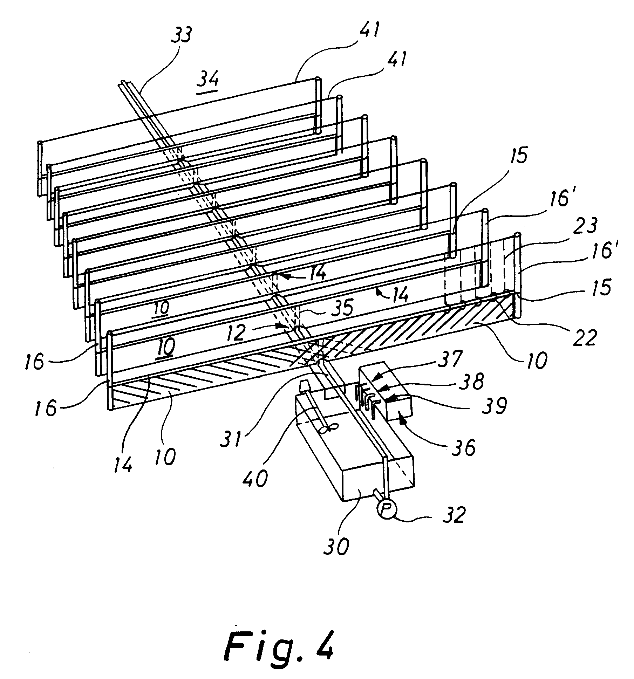

Prior to using the growing device a supply pipe 14 for nutrient solution is inserted into the upper longitudinal passageway 7. The growing device is then mounted on suspension means 15 in form of two parallel wires 15 stretched horizontally between two posts 16, 16′, cf. Figure 4. The two wires 15 are positioned on either side of the growing device 10 and just below the upper longitudinal passageway 7 with the inserted supply pipe 14, and kept close to each other. Thus the supply pipe is nested on the two wires 15 and the rest of the growing device 10 is suspended therefrom.

Different kinds of supply pipes 14 are usable, provided that they can transfer a continuous flow of nutrient solution into each transverse passageway 9, for instance by drip irrigation. In the preferred embodiment a supply pipe 14 of the type comprising a polyethylene pipe with inserted fittings having outlets 17 opposite each transverse passageway 9 is used. The supply pipes are not a part of this invention, but are included for the sake of clarity.

Upon suspension of the growing device 10 nutrient solution is supplied via the supply pipe 14 with outlets 17 and transferred in a continous flow to each transverse passageway 9. A plant 18 is inserted through the throughcut 11 with the roots 19 of the plant positioned inside the transverse passageway 9 and the stem 20 and top 21 of the plant extending through said throughcut 11 outside of the growing device 10. The nutrient solution quickly percolates through the roots 19 and is partially absorbed by said roots. The remaining excess nutrient solution percolates down through the transverse passageway 9 and drains out at the bottom of the transverse passageway for being collected inside the lower longitudinal passagewasy 8 of the growing device 10. As the wires 15 loaded with the growing device 10 are only suspended at their ends, the wires 15 and thus the growing device 10 are curved downwardly. Upon collection in the longitudinal passageway 8 the excess nutrient solution flows towards the opening 12 acting as an outlet at the middle of said passageway. For preventing the wires 15 from separating from each other resulting in the growing device 10 sliding down between them, gripping means, such as hooks 22, are inserted under the wires 15, surrounding said wires and holding then together below the upper longitudinal passageway 7 holding the supply pipe 14.

In order to obtain support for the top 21 of a plant 18, the hooks 22 are suspended in strings 23 mounted in mounting means 41, cf. Figure 4. The top 21 of the plant 18 is fastened to said strings 23 in a manner known per se. When employing the hooks 22 one of the wires 15 can be omitted. It is further possible to exclusively use the hooks 22 and the strings 23 for the suspension of the growing device. This is of special relevance in case of a rigid supply pipe 14. Under such circumstances both wires 15 can be omitted.

Figure 3 illustrates another embodiment of the inventive growing device 10, where the transverse sealing lines 6 extend substantially perpendicular to the longitudinal direction C-C of the growing device 10. In this embodiment an additional sealing is formed at the top of each transverse passageway, substantially along longitudinally extending sealing lines 26, in order to provide an inlet for the nutrient solution close to the throughcut 11. The additional sealing 26 extends from the end of one transverse sealing line 6 at the upper longitudinal passageway 7 to a point some distance away from the neighbouring transverse sealing line 6 and slopes away from said longitudinal passageway 7. This results in a passage 27 from the longitudinal passageway 7 to a transverse passageway 9, said passage allowing the flow of nutrient solution from the longitudinal passageway 7 to the transverse passageway 9. The throughcut 11 is placed above the passage 27 so that the roots 19 of an inserted plant 18 are positioned in the area of the passage 27.

Apart from the differently orientated, transverse-sealing lines 6 and the additional longitudinal sealings 26 the rest of the growing device 10 is as described above in connection with Figures 1 and 2. The additional sealings 26 can, of course, also be introduced in the embodiment of Figures 1 and 2, although they are normally not necessary in connection with a growing device having transverse sealing lines substantially inclined to the longitudinal direction of the growing device.

Figure 4 illustrates an embodiment of the inventive improved system for hydroponical growing of plants using the inventive growing device 10. The system includes a plurality of parallel rows of growing devices 10 each mounted on wires 15 supported by posts 16, 16′ and with supply pipes 14 inserted in each growing device. Additional suspension means are provided in form of hooks 22 inserted through the growing device 10 beneath the wires 15 and the supply pipe 14, said hooks being suspended in strings 23 mounted in a mounting means 41. By means of a pump 32 and via a pressure pipe 31 the nutrient solution is carried from a collecting tank 30 to the individual growing devices 10. The pressure pipe 31 is preferably led through a gutter 33 leading to the collecting tank 30 and extending transverse to the growing devices 10 and midways between the posts 16, 16′ in the ground 34.

Nutrient solution is carried to the supply pipe 14 in the growing device 10 through a vertical distribution pipe 35 opposite the growing device and optionally extending through a transverse passageway 9 of the growing device. Especially in case of inclined transverse sealing lines 6, the growing device 10 can be divided into two halves, each mounted on a supply pipe 14 one either side of the gutter 33 between the posts 16, 16′ and the distribution pipe 35, preferably in a laterally reversed manner.

At the bottom of each growing device an outlet 12 is formed above the gutter 33. The collecting tank 30 is provided with a control means 36 including a known measuring and dispensing assembly 37, 38, 39. At 37 the measuring assembly measures the content of nutrients and other additives necessary for the growth of plants in the nutrient solution contained in the collecting tank 30. Furthermore it controls the addition of water at 38 and the addition of necessary additives to said solution at 39 in order to obtain a solution with a desired concentration of nutrients. Furthermore the collecting tank 30 is provided with a propeller 40.

For using the system the growing devices 10 are mounted on supply pipes 14 and wires 15. An appropriate nutrient solution is prepared and circulated in the system by means of the pump 32 via pressure pipe 31, distribution pipes 35 and supply pipes 14. From the supply pipes 14 the nutrient solution percolates through each transverse passageway 9 of the growing devices 10 and flows out through outlets 12 into the gutter 33 and is returned to the collecting tank 30 for recirculation.

Now the roots 19 of the plants 18 are inserted into the transverse passageways 9. The circulating nutrient solution percolates over the roots of the plants, said roots absorbing some of the water and the additives. The excess nutrient solution is returned to the collecting tank 30 together with waste products having been excreted from the roots of the plants.

In the collecting tank 30 of the nutrient solution is continuously monitored and adjusted by the control means 36. The collecting tank 30 can be provided with an additional rinsing means (not shown) for removing some of the waste products from the plants 18. A predetermined amount of the return solution is to be discarded, either at intervals or continuously, in order to keep the content of waste products separated from the roots below a predetermined standard.

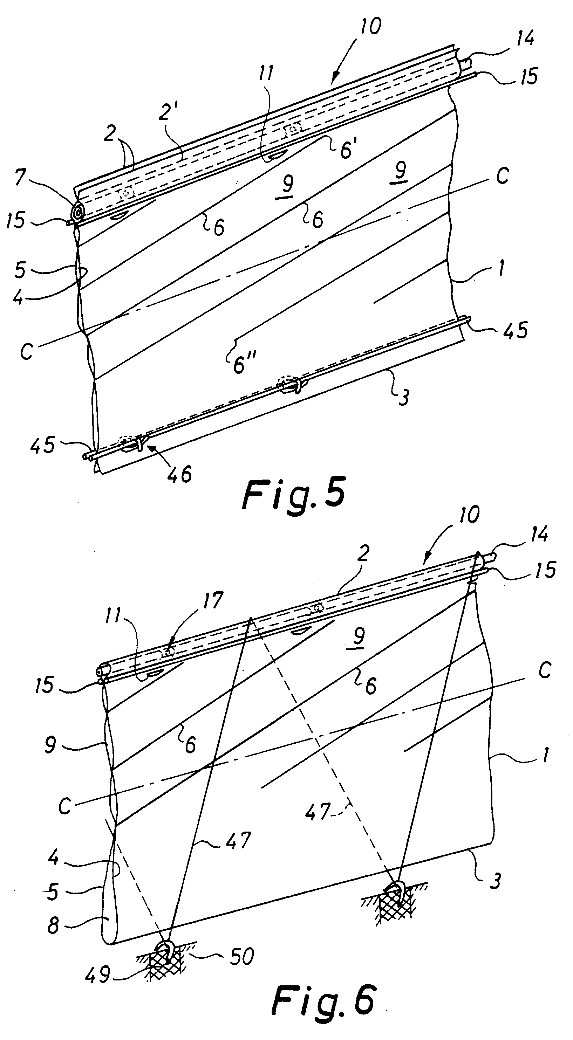

Figure 5 illustrates a further embodiment of the growing device 10 of the invention. The growing device 10 includes a length 1 of two separate layers 4, 5 of sheet material superposed each other, said layers 4, 5 being sealed together along transverse sealing lines 6 as described in connection with Figure 1. The two layers 4, 5 are interconnected along a connection line 2′ at the upper edges 2 of said layers, for instance by welding, seaming or by means of locking elements spaced apart in the longitudinal direction C-C of the device. As in Figure 1, a supply pipe 14 is inserted in the upper longitudinal passageway 7 between the connecting line 2′ and the transverse sealing lines 6. At the lower part of the device 10 a pair of suspension wires 45 is positioned on either side of the device, stretched between the two posts 16, 16′, cf. Figure 4, and kept close to each other by means of clamps 46 inserted through the two layers 4, 5 and surrounding and interlocking the two suspension wires 45. The lower edges 3 of the two layers 4, 5 are left unconnected, thereby leaving a longitudinal opening extending at the bottom of growing device 10 so that excess nutrient solution is let out into the soil or in a gutter (not shown).

In Figure 6 the embodiment of the growing device 10 of Figure 1 is shown with supporting means in form of a supporting string 47 would helically around the growing device 10 and fastened at anchoring means, such as anchoring hooks 48 secured in anchoring blocks 49 in the ground 50. Preferably said strings are made of elastic material. Instead of anchoring blocks 49 a single suspension wire or rod 45 at the bottom of the device can be used.

Furthermore, instead of the clamps 46 of Figure 5, one end of plastic straps (not shown) can be inserted through the layers 4, 5 and tied to the suspension wire or rod 45 at the bottom of the device, the opposite ends of said straps being provided with enlarged end pieces having shoulders acting as holder. Throughcuts with strengthend edges and for the insertion of said plastic straps are provided in the collapsed tubing simultaneous with the forming of the sealing lines 6, for instance by heat-sealing the two layers of plastic 4, 5 to each other in said areas.

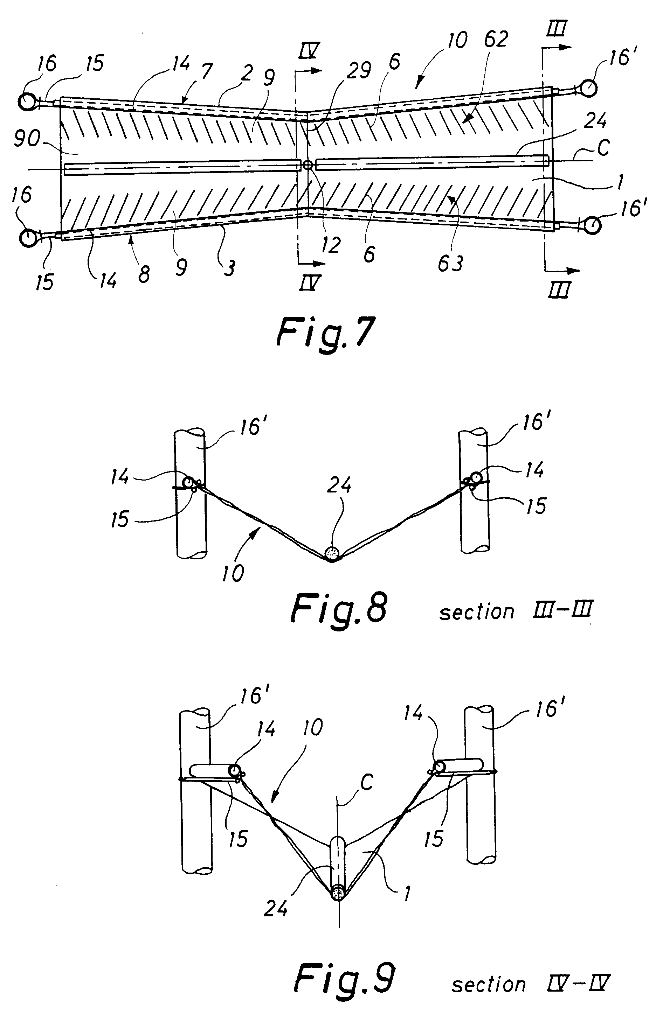

Figures 7-10 illustrate another preferred embodiment of the invention, in which the growing device 10 comprising a collapsed tubing 1 is provided with two parallel rows 62, 63 of transverse sealing lines 6 symmetrically placed around the centre line C and with two longitudinal, outer, free passageways 7, 8 at the opposing edges 2, 3 of the tubing 1. Supply pipes 14 for nutrient solution are inserted in said passageways 7, 8. A free longitudinal central passageway 90 is provided between the two rows 62, 63 of transverse sealing lines 6. Transverse passageways 9 between neighbouring transverse sealing lines 6 in a row 62, 63 are open to the respective longitudinal, outer passageway 7, 8 and to the longitudinal central passageway 90, thus forming passages therebetween for the nutrient solution and for the roots of the plants 18. At least one throughcut 12 is provided in the central passageway acting as an outlet 12 for excess nutrient solution.

When mounted, each of said edges 2, 3 having longitudinal, outer passageways 7, 8 with supply pipes 14 inserted therein are nested on suspended, opposing wires 15 each streched between two posts 16, 16′ in substantially the same level, cf. Figure 4. The interjacent part of the growing device 10 hangs between and below said wires 15. Midways between the posts 16, 16′ a strap 29 surrounding the opposing wires 15 is tightened thus drawing said wires towards each other. As a result the bottom of the central part of the growing device 10 has a lower position than at the ends of said growing device causing an downward inclination of the central passageway towards the outlet 12, cf. the sectional views along the lines III-III and IV-IV of Figure 7. Moreover the weight of the suspension means 15 and of the growing device 10 with supply pipes 14, plants 18 and nutrient solution weighs down the entire growing device 10 in a curve between the posts 16, 16′ thus intensifying said inclination. When the growing device 10 is mounted outdoors a weighting member 24 in form of at least one sandhose may be placed on the growing device 10 above the central passageway 90, thereby assisting the growing device 10 to resist wind action.

The use of this embodiment of the growing device 10 is disclosed in connection with the growing device 10 of Figures 1-6, except that in this case two supply pipes 14 and two series of transverse passageways 9 are provided for each growing device 10. Due to the transverse inclination of the growing device towards the central passageway 90 this embodiment is suitable for growing several plants in each transverse passageway 9 thereby obtaining an intensive utilization of the area of the growing device.

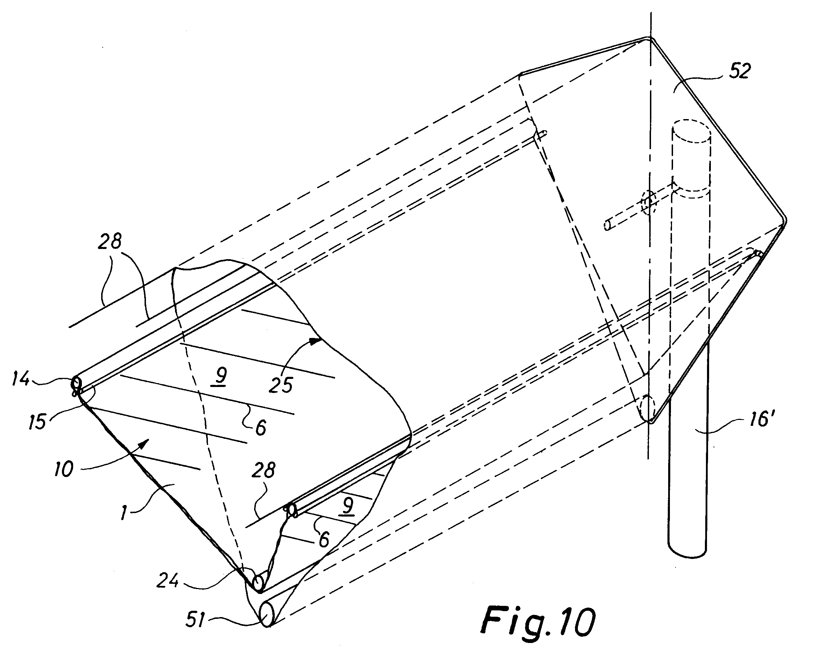

The embodiment illustrated in Figure 10 is further provided with an outer plastic tubing 25 surrounding the suspended growing device 10, said plastic tubing being supported by an intermediate carrying means 28 in form of three parallel wires suspended triangularly and roof-shaped above the growing device 10 between two end frames 52 each clamped on a post 16, 16′. In this case also the wires 15 are suspended between said two end frames 52. An outer plastic tubing 25 rests on above three parallel wires and is weighed down by a weighting member 51 inserted inside the bottom of the tubing 25. Instead of the three parallel wires the carrying means 28 can also be made of spirally wound steel strings or another type of upwards curved frames resting on top of the growing device 10 or mounted in end frames 52. At the ends of the growing device 10 the outer plastic tubing 25 can be closed outside of the end frames 52, thereby ensuring the maintainance of elevated temperatures and relative humidity inside the tubing.

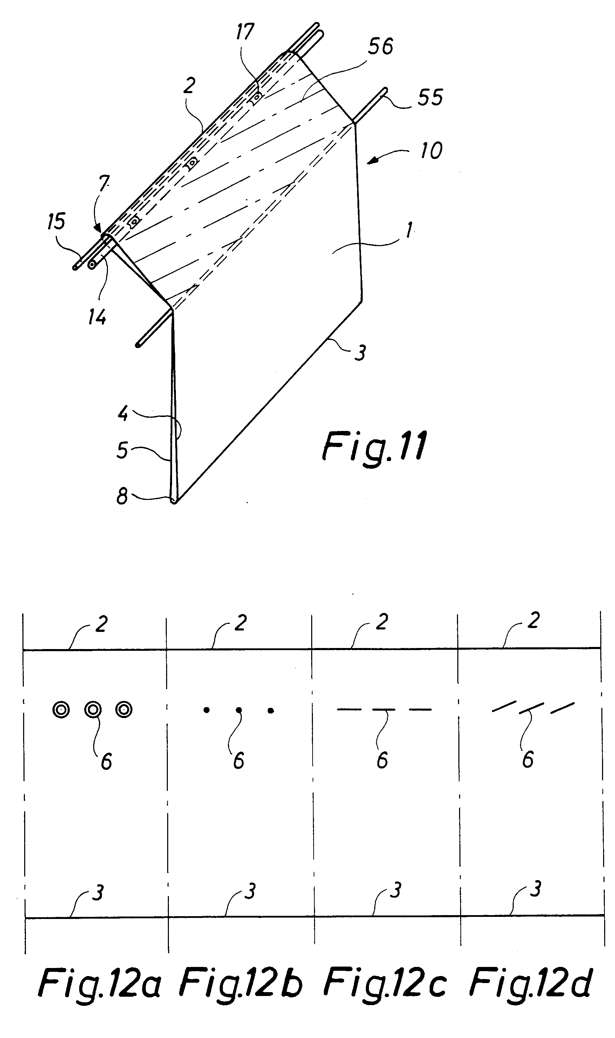

Figure 11 illustrates a further simplified embodiment of the inventive growing device (10). This growing device 10 comprises a collapsed plastic tubing (1) having a first upper, closed longitudinal edge 2 and a second lower, closed longitudinal edge (3) opposing each other, the opposing intermediate two layers (4, 5) of the collapsed tubing (1) being without any sealing therein. Said growing device (10) is used suspended on a single wire (15) inserted therein alongside the supply pipe (14) inside the upper longitudinal passageway (7), and the upper part of said growing device (10) is placed in a sloping way by means of a displacement means (55) in the form of a wire suspended parallel with, below and sideways displaced from the suspension wire (15). Optionally, said layers (4, 5) could be provided with pleatings (56) extending parallel with, inclined to or perpendicular to the direction of length for the growing device (10). The effect of said pleatings (56) is that the nutrient solution on meeting such a pleating (56) will tend to follow said pleating, thereby guiding the water to the roots. Of course, it would also be possible to use this embodiment of the growing device (10) suspended on wires (15) inserted in each of the longitudinal passageways (7, 8) together with two supply pipes, as disclosed in connection with Figures 7-10, however, in this connection without using any displacement means (55).

In Figures 12a, b, c, d is illustrated various geometric forms of sealing zones (6) applicable in connection with the invention in addition to the previously mentioned forms. The advantage of said forms of sealing zones (6) is that depending on the composition and thickness of the material of the layers (4, 5) the way of suspension of the growing device (10) and the kind of plants grown therein various forms of sealing zones are desirable. In figure 12a the sealings are ring-formed, in Figure 12b in the form of spot weldings, and in Figures 12c and d in the form of short sealing lines of a length of between 5 and 15 cm and extending parallel with, inclined to or perpendicular to the direction of length of the growing device (10).

## Claims

1. A method of hydroponical growing of plants comprising the steps of:
- inserting a drip irrigation pipe (14) having outlets (17) disposed along the length thereof in between a pair of flatwise juxtaposed layers (4, 5) of water-impervious material of a plant growing device (10) alongside a first longitudinal edge (2) thereof,
- suspending said drip irrigation pipe and said growing device on at least one suspension means (15) placed in a substantially horizontal level with said first longitudinal edge and said pipe disposed adjacent said at least one suspension means, and the remaining part of the plant growing device (10) hanging from said suspension means,
- placing the roots (19) of a number of plants (18) in between said two juxtaposed layers of the growing device, the roots of each plant being disposed downstream of one of said outlets,
- continuous feeding of nutrient solution through said drip irrigation pipe and said outlets and guiding it to the roots of each plant,
characterized by
using a plant growing device (10) being closed at said first longitudinal edge (2) and having minor spaced throughcuts (11) through at least one of the layers (4, 5) close to said first closed longitudinal edge (2) each of said throughcuts being adapted for the insertion of the roots (19) of a plant (18) and with the stem (20) of the plant extending through the throughcut (11), and
- allowing said nutrient solution quickly to percolate along the roots of the plants and taking out and collecting percolated excess nutrient solution from below the roots for recirculation or discharge thereof, thereby generating optimal conditions for the roots, including the maintenance of a very thin film of percolating fresh nutrient solution having a low concentration of nutrient salts and waste products on the roots, said film being surrounded by an atmosphere having a nearly 100% relative humidity and a high content of oxygen.

2. A method as claimed in claim 1, characterized by using a nutrient solution having a carefully controlled concentration of nutrients well below 2 per thousand, and by feeding nutrient solution in the amount of at least 0.1 l/h for each plant, preferably at least 0.25 l/h for each plant.

3. A method as claimed in claim 1 or 2, characterized by placing an upper part of the plant growing device (10) sloping proportionally to the vertical plane containing the suspension means (15), by means of a longitudinal displacement means (55).

4. A method as claimed in any of claims 1-3, characterized by using a flattened plastic tubing (1) being closed alongside the bottom edge (3) as well as alongside the top edge (2), except for a discharge opening (12) at the lowest point of the bottom edge (3).

5. A method as claimed in any of claims 1-4, characterized by using a growing device having said pair of flatwise juxtaposed layers (4, 5) sealed together in intermediate lines or zones (6) spaced in the longitudinal direction of the said layers and forming a series of transverse passageways (9) between said zones (6) for the passage of nutrient solution and development of the roots (19).

6. A method as claimed in any of claims 1-5, characterized by using a flattened plastic tubing (1), each closed longitudinal edge (2, 3) thereof being provided with a drip irrigation pipe (14) alongside the length thereof, each closed edge (2, 3) and each pipe being suspended on a separate suspension means (15), the intermediate part of the growing device sagging therebetween, the nutrient solution being fed through each of said drip irrigation pipes (14) and upon percolation towards the middle (C) of the growing device taken out through a discharge opening therein.

7. A growing device (10) for hydroponical growing of plants comprising:
- a windable length (1) of a pair of flatwise juxtaposed layers (4, 5) of water-impervious material forming first and second longitudinal edges (2, 3),
- the two layers (4, 5) being interconnected at least along said first longitudinal edge (2) and being adapted for insertion of a drip irrigation pipe (14) having outlets (17) disposed along the length thereof inbetween said layers (4, 5) alongside said first longitudinal edge (2), said layers (4, 5) and said pipe (14) further being adapted for suspension on a substantially horizontal suspension means (15) alongside said first interconnected edge (2),
characterized by
said windable length (1) of layers (4, 5) being closed at said first interconnected edge (2),
- at least one of said two layers (4, 5) having minor throughcuts (11) spaced along the length thereof and close to said first edge (2), each of them for the insertion of the roots (19) of a plant (18), adapted to have the stem (20) of the plant (18) extended through the throughcut (11),
- said length (1) further being provided with a discharge opening (12) for percolated nutrient solution at the bottom thereof.

8. A growing device (10) as claimed in claim 7, characterized by
- said length (1) being a flattened tubing (1) of plastic film, with the second longitudinal edge (3) thereof being closed and
- the discharge opening (12) being provided at the lowest point of said second closed longitudinal edge (3).

9. A growing device (10) as claimed in claim 7 or 8, characterized by said two layers (4, 5) being sealed in sealing zones (6), having the form of dots or rings or straight or curved lines and being spaced along the longitudinal direction of said layers (4, 5), said sealing zones (6) leaving longitudinally free passageways (7, 8) alongside said first and second edges (2, 3) and forming a series of successive transverse passageways (9) open to said two longitudinally extending passageways (7, 8), said transverse passageways (9) having a substantially flat cross-section.

10. A growing device (10) as claimed in claim 7 and for the practicing of the method of claim 6,
characterized by
both of said longitudinal edges (2, 3) being closed and the length (1) of the two layers (4, 5) being adapted for insertion of a drip irrigation pipe (14) at each edge (2, 3), and for suspension with said pipes (14) on substantially horizontal suspension means (15) alongside each edge (2, 3),
- said two layers (4, 5) being sealed along two parallel longitudinal rows (62, 63) of sealing zones (6), each sealing zone in a row extending between a first point (6') located some distance away from a closed edge (2, 3) of the length (1), and a second point (6'') located further away from said closed edge (2, 3) and some distance away from the centre line (C) of the length (1) and on the same side thereof as said first point (6'),
- said rows (62, 63) of sealing zones (6) thereby leaving free longitudinal passageways (7, 8) each extending along the length of a respective one of said closed edges (2, 3) and a free longitudinal, central passageway (90) extending between said two parallel rows (62, 63) of sealing zones (6), said two rows of sealing zones further forming two series of successive, transverse, flat passageways (9) separated from each other by the sealing zones (6) and each open to a corresponding longitudinal, outer passageway (7, 8) and to the longitudinal, central passageway (90),
the discharge opening (12) being provided at the lowest point of the central passageway (90).

11. A system for hydroponical growing of plants, comprising
- a collection tank (30) for a nutrient solution,
- a control means (36) for continuously measuring and adjusting the content of nutrient salts and other additives necessary for the growth of plants by adding the necessary amounts of water, macrosubstances, and microsubstances, to the nutrient solution, pumps (32) and pipes (31, 35) for continuously carrying of nutrient solution to the plants (18), and
- at least one gutter (33) for collecting and passing-on of used, excess nutrient solution from the plants (18) to the collecting tank (30),
characterized by further comprising
- a number of growing devices (10) as claimed in any of the claims 7-10,
- a corresponding number of supply pipes (14) inserted therein and of a length at least equal to the length of the growing device (10) and
- a corresponding number of
- suspension means (15, 24) for suspending the growing device (10) and each inserted supply pipe (14) in such a manner that each growing device (10) is located above and transverse to the gutter (33) with its lower longitudinal passageway (8) or central passageway (90), respectively, slightly inclined downwards towards said gutter (33) and with the outlet (12) thereof just above said gutter.

12. A system as claimed in claim 11, characterized in that the suspension means (15, 24) comprises
- at least one suspension member, such as a cord or a wire (15), stretched between at least two posts (16, 16'), and optionally
- gripping means (22) gripping around the suspension member (15) and the upper part of the growing device (10), holding the supply pipe (14) at suitable places along the length thereof, thereby fastening the growing device (10) to the suspension member (15),
- said suspension member being positioned at a level sufficient for keeping the bottom of the growing device (10) just above the top of the gutter (33).

13. A system as claimed in claim 12, characterized in that
- the suspension means (15) comprises two parallel wires (15), tightly stretched between two posts (16, 16'), and kept close to each other on either side of the growing device (10) beneath the supply pipe (14) inserted therein, and in that
- the suspension means (15) further comprises gripping means (22), such as hooks, inserted under the wires (15) and the supply pipe (14) and suspended by strings (23) fastened to a mounting means (41) above the growing device (10),
- thereby supporting the growing device (10) and the plants (18) inserted therein,
- the top (21) of said plants being fastened to the strings (23).

14. A system as claimed in any of the preceding claims 11-13, characterized by a further supporting means (45-48) supporting each growing device against being forcibly removed from said substantially vertically suspended hanging position, for instance by means of wind, said supporting means comprising at least one suspension member (45) stretched between said posts (16, 16') at a level just above the lower longitudinal passageway (8), and a number of locking elements, such as hooks, clamps, straps or pins (46), securing the growing device (10) to the suspension members (45), said supporting means including anchoring means (47) such as tapes, nets or strings to be fastened at anchoring blocks (48) or suspension members (45) secured below the growing device.

15. A system as claimed in claim 12, in which said suspension means (15, 24) comprises at least one suspension member or weighting member (24) pressing or weighing down the central part of the growing device (10).

16. A system as claimed in any of the preceding claims 11-13 and 15, and including a growing device as claimed in claim 10,
- wherein the opposing closed edges (2, 3) of said growing device (10) having supply pipes (14) inserted in the longitudinal outer passageways (7, 8) thereof are nested on suspension members (15) located opposite each other and substantially on the same level, and with the interjacent part of the growing device (10) in a hanging position between and below said suspension members (15), and
- further including an outer plastic tubing (25) surrounding said growing device (10) and carried by an intermediate carrying means (28),
- said outer plastic tubing being closed at each end of the growing device (10).

17. A method as claimed in any of claims 1 to 7, characterized by welding together said pair of layers (4, 5) along said first longitudinal edge (2).

## Patentansprüche

1. Verfahren zur hydroponischen Aufzucht von Pflanzen, welches die Schritte umfaßt:
Einsetzen eines Tropfberieselungsrohrs (14) mit entlang seiner Länge angeordneten Auslässen (17) zwischen ein Paar flach nebeneinander liegender Schichten (4, 5) aus wasserundurchlässigem Material entlang einem ersten Längsrand (2) einer Pflanzenaufzuchtvorrichtung (10),
Aufhängen des Tropfberieselungsrohrs und der Aufzuchtvorrichtung an wenigstens einem Aufhängungsmittel (15), das in einer im wesentlichen horizontalen Lage angeordnet ist, wobei der erste Längsrand und das Rohr dem wenistens einen Aufhängungsmittel benachbart angeordnet sind und der verbleibende Teil der Pflanzenaufzuchtvorrichtung (10) von dem Aufhängungsmittel abhängt,
Anordnen der Wurzeln (19) einer Anzahl von Pflanzen (18) zwischen den zwei nebeneinander liegenden Schichten der Aufzuchtvorrichtung, wobei die Wurzeln jeder Pflanze stromabwärts eines der Auslässe angeordnet sind,
kontinuierliches Zuführen einer Nährlösung durch das Tropfberieselungsrohr und die Auslässe und Leiten dieser zu den Wurzeln jeder Pflanze,
**gekennzeichnet durch**
die Verwendung einer Pflanzenaufzuchtvorrichtung (10), die an dem ersten Längsrand (2) geschlossen ist und nahe dem ersten geschlossenen Längsrand (2) kleine mit Abstand voneinander angeordnete Einschnitte (11) durch wenigstens eine der Schichten (4, 5) aufweist, wobei jeder der Einschnitte zum Einsetzen der Wurzeln (19) einer Pflanze (18) geeignet ist, so daß der Stiel (20) der Pflanze den Einschnitt (11) durchsetzt, und
Ermöglichen, daß die Nährlösung schnell entlang der Wurzeln der Pflanzen perkoliert, und Herausnehmen und Sammeln der perkolierten überschüssigen Nährlösung von unterhalb der Wurzeln, um diese rückzuführen oder abzulassen, um hierdurch optimale Bedingungen für die Wurzeln zu schaffen, einschließlich der Aufrechterhaltung eines sehr dünnen Films perkolierender frischer Nährlösung mit einer geringen Konzentration von Nährsalzen und Abfallprodukten auf den Wurzeln, welcher Film von einer Atmosphäre mit nahezu 100 % relativer Feuchtigkeit und einem hohen Sauerstoffgehalt umgeben ist.

2. Verfahren nach Anspruch 1,
**gekennzeichnet durch** die Verwendung einer Nährlösung mit einer sorgfältig gesteuerten Konzentration von Nährstoffen deutlich unterhalb zwei von tausend, und durch Zuführen von Nährlösung in der Menge von wenigstens 0,1 l/h für jede Pflanze, bevorzugt wenigstens 0,25 l/h für jede Pflanze.

3. Verfahren nach Anspruch 1 oder 2,
**gekennzeichnet durch** Anordnen eines oberen Teils der Pflanzenaufzuchtvorrichtung (10) mittels eines längs verlaufenden Verlagerungsmittels (55) derart, daß es im Verhältnis zu der das Aufhängungsmittel (15) enthaltenden Vertikalebene geneigt ist.

4. Verfahren nach einem der Ansprüche 1 bis 3,
**gekennzeichnet durch** die Verwendung eines abgeflachten Kunststoffschlauchs (1), der entlang dem Unterrand (3) sowie entlang dem Oberrand (2) außer für eine Auslaßöffnung (12) am untersten Punkt des Unterrands (3) geschlossen ist.

5. Verfahren nach einem der Ansprüche 1 bis 4,
**gekennzeichnet durch** die Verwendung einer Aufzuchtvorrichtung mit dem Paar flach nebeneinander liegender Schichten (4, 5), die in zwischenliegenden Linien oder Zonen (6), die in Längsrichtung der Schichten mit Abstand voneinander angeordnet sind und zwischen den Zonen (6) eine Serie von Querpassagen (9) für den Durchtritt der Nährlösung und für die Entwicklung der Wurzeln (19) bilden, dicht miteinander verbunden sind.

6. Verfahren nach einem der Ansprüche 1 bis 5,
**gekennzeichnet durch** die Verwendung eines abgeflachten Kunststoffschlauchs (1), dessen jeweils geschlossene Längsränder (2, 3) entlang ihrer Länge mit einem Tropfberieselungsrohr (14) versehen sind, wobei jeder geschlossene Rand (2, 3) und jedes Rohr an einem separaten Aufhängungsmittel (15) aufgehängt sind, der zwischenliegende Teil der Aufzuchtvorrichtung dazwischen durchhängt und die durch jedes der Tropfberieselungsrohre (14) zugeführte Nährlösung nach Perkolation zu der Mitte (C) der Aufzuchtvorrichtung hin durch eine in ihr befindliche Ablaßöffnung entnommen wird.

7. Aufzuchtvorrichtung (10) zur hydroponischen Aufzucht von Pflanzen, umfassend:
einen aufwickelbaren Längsabschnitt (1) eines Paars flach nebeneinander liegender Schichten (4, 5) aus wasserundurchlässigen Material unter Bildung erster und zweiter Längsränder (2, 3),
wobei die zwei Schichten (4, 5) wenigstens entlang dem ersten Längsrand (2) miteinander verbunden sind und zum Einsetzen eines Tropfberieselungsrohrs (14) geeignet sind, dessen Auslässe (17) entlang seiner Länge zwischen den Schichten (4, 5) entlang dem ersten Längsrand (2) angeordnet sind, wobei die Schichten (4, 5) und das Rohr (14) weiter zum Aufhängen an einem im wesentlichen horizontalen Aufhängungsmittel (15) entlang den ersten verbundenen Rand (2) geeignet sind,
**dadurch gekennzeichnet,** daß der aufwickelbare Längsabschnitt (1) aus Schichten (4, 5) an dem ersten verbundenen Rand (2) geschlossen ist,
wenigstens eine der zwei Schichten (4, 5) entlang ihrer Länge und nahe dem ersten Rand (2) kleine Einschnitte (11) aufweist, von denen jeder zum Einsetzen der Wurzeln (19) einer Pflanze (18) geeignet ist, so daß der Stiel (20) der Pflanze (18) den Einschnitt (11) durchsetzt,
wobei weiter der Längsabschnitt (1) an seinem Boden mit einer Ablaßöffnung (12) für perkolierte Nährlösung versehen ist.

8. Aufzuchtvorrichtung (10) nach Anspruch 7,
**dadurch gekennzeichnet,**
daß der Längsabschnitt (1) ein abgeflachter Schlauch aus Kunststoffolie ist, dessen zweiter Längsrand (3) geschlossen ist, und
daß die Ablaßöffnung (12) an dem untersten Punkt des zweiten geschlossenen Längsrands (3) vorgesehen ist.

9. Aufzuchtvorrichtung (10) nach Anspruch 7 oder 8,
**dadurch gekennzeichnet,**
daß die zwei Schichten (4, 5) in Dichtzonen (6) dicht miteinander verbunden sind, die die Form von Punkten oder Ringen oder geraden oder gekrümmten Linien aufweisen und entlang der Längsrichtung der Schichten (4, 5) mit Abstand voneinander angeordnet sind, welche Dichtzonen (6) entlang den ersten und zweiten Rändern (2, 3) längsverlaufende freie Passagen (7, 8) lassen und eine Serie aufeinanderfolgender Querpassagen (9) bilden, die zu den zwei längs verlaufenden Passagen (7, 8) offen sind, wobei die Querpassagen (9) einen im wesentlichen flachen Querschnitt aufweisen.

10. Aufzuchtvorrichtung (10) nach Anspruch 7 und zur Durchführung des Verfahrens nach Anspruch 6,
**dadurch gekennzeichnet,**
daß beide Längsränder (2, 3) geschlossen sind und der Längsabschnitt (1) der zwei Schichten (4, 5) zum Einsetzen eines Tropfberieselungsrohrs (14) an jedem Rand (2, 3) und zur Aufhängung mit den Rohren (14) an im wesentlichen horizontalen Aufhängungsmitteln (15) entlang jedem Rand (2, 3) geeignet ist,
wobei die zwei Schichten (4, 5) entlang zwei paralleler Längsreihen (62, 63) von Dichtzonen (6) dicht miteinander verbunden sind, wobei jede Dichtzone in einer Reihe zwischen einem ersten Punkt (6'), der mit etwas Abstand von einem geschlossenen Rand (2, 3) des Längsabschnitts (1) entfernt angeordnet ist, und einem zweiten Punkt (6''), der von dem geschlossenen Rand (2, 3) weiter entfernt und mit etwas Abstand von der Mittellinie (C) des Längsabschnitts (1) und an derselber Seite des Längsabschnitts wie der erste Punkt (6') angeordnet ist, verläuft,
wodurch die Reihen (62, 63) der Dichtzonen (6) freie Längspassagen (7, 8) lassen, die jeweils entlang der Länge eines entsprechenden der geschlossenen Ränder (2, 3) und einer freien längs verlaufenden Mittelpassage (90) verlaufen, die zwischen den zwei parallelen Reihen (62, 63) der Dichtzonen (6) verläuft, wobei die zwei Reihen der Dichtzonen weiter zwei Serien aufeinanderfolgender querverlaufender flacher Passagen (9) bilden, die durch die Dichtzonen (6) voneinander getrennt sind und zu einer entsprechenden längsverlaufenden äußeren Passage (7, 8) und zu der längsverlaufenden Mittelpassage (90) offen sind,
wobei die Ablaßöffnung (12) an dem untersten Punkt der Mittelpassage (90) vorgesehen ist.

11. System zur hydroponischen Aufzucht von Pflanzen, umfassend:
einen Sammeltank (30) für eine Nährlösung,
ein Steuermittel (36) zum kontinuierlichen Messen und Einstellen des Gehalts von Nährsalzen und anderen für die Aufzucht von Pflanzen erforderlichen Additiven durch Hinzufügen der erforderlichen Mengen von Wasser, Makrosubstanzen und Mikrosubstanzen zu der Nährlösung,
Pumpen (32) und Rohre (31, 35) zum kontinuierlichen Führen von Nährlösung zu den Pflanzen (18), und
wenigstens eine Rinne (33) zum Sammeln und Leiten verbrauchter überschüssiger Nährlösung von den Pflanzen (18) zu dem Sammeltank (30),
**dadurch gekennzeichnet,**
daß es weiter aufweist:
eine Anzahl von Aufzuchtvorrichtungen (10) nach einem der Ansprüche 7 bis 10,
eine entsprechende Anzahl von Versorgungsrohren (14), die in diese eingesetzt sind und eine Länge von wenigstens gleich der Länge der Aufzuchtvorrichtung (10) aufweisen, und
eine entsprechende Anzahl von Aufhängungsmitteln (15, 24) zum Aufhängen der Aufzuchtvorrichtung (10) und jedes eingesetzten Versorgungsrohrs (14) derart, daß jede Aufzuchtvorrichtung (10) oberhalb und quer zu der Rinne (33) angeordnet ist, wobei deren untere Längspassage (8) bzw. Mittelpassage (90) zu der Rinne (33) hin geringfügig abwärts geneigt ist und sich deren Auslaß (12) direkt über der Rinne befindet.

12. System nach Anspruch 11,
**dadurch gekennzeichnet,**
daß das Aufhängungsmittel (15, 24) umfaßt:
wenigstens ein Aufhängungsteil, wie etwa eine Schnur oder einen Draht (15), das zwischen wenigstens zwei Pfosten (16, 16') gespannt ist, und gegebenenfalls
Greifmittel (22), die um das Aufhängungsteil (15) und den obere Teil der Aufzuchtvorrichtung (10) herum greifen und das Versorgungsrohr (14) entlang dessen Länge an geeigneten Stellen halten, um hierdurch die Aufzuchtvorrichtung (10) an dem Aufhängungsmittel (15) zu befestigen,
wobei das Aufhängungsteil in einer Lage angeordnet ist, die ausreicht, den Boden der Aufzuchtvorrichtung (10) direkt über der Oberseite der Rinne (33) zu halten.

13. System nach Anspruch 12,
**dadurch gekennzeichnet,**
daß das Aufhängungsmittel (15) zwei parallele Drähte (15) umfaßt, die zwischen zwei Pfosten (16, 16') stramm gespannt sind und jederseits der Aufzuchtvorrichtung (10) unter dem darin eingesetzten Versorgungsrohr (14) nahe beieinander gehalten sind, und daß
das Aufhängungsmittel (15) weiter Greifmittel (22), wie etwa Haken, aufweist, die unter die Drähte (15) und das Versorgungsrohr (14) eingesetzt und an Seilen (23) aufgehängt sind, die an einem Anbringungsmittel (41) über der Aufzuchtvorrichtung (10) befestigt sind, um hierdurch die Aufzuchtvorrichtung (10) und die darin eingesetzten Pflanzen (18) zu tragen, wobei die Oberteile (21) der Pflanzen an den Seilen (23) befestigt sind.

14. System nach einem der Ansprüche 11 bis 13,
**gekennzeichnet durch** ein weiteres Haltemittel (45-48), das jede Aufzuchtvorrichtung gegen Verlagern aus der im wesentlichen vertikal aufgehängten Hängestellung durch Krafteinwirkung, beispielsweise durch Wind, hält, welches Haltemittel wenigstens ein Aufhängungsteil (45) umfaßt, das zwischen den Pfosten (16, 16') in einer Lage direkt oberhalb der unteren Längspassage (8) gespannt ist, und eine Anzahl von Sperrelementen, wie etwa Haken, Klammern, Bänder oder Stifte (46), die die Aufzuchtvorrichtung (10) an den Aufhängungsteilen (45) sichern, wobei das Haltemittel Verankerungsmittel (47), wie etwa Bänder, Netze oder Seile zur Anbringung an Verankerungsblöcken (48) oder Aufhängungsteilen (45) umfaßt, die unterhalb der Aufzuchtvorrichtung gesichert sind.

15. System nach Anspruch 12, in dem das Aufhängungsmittel (15, 24) wenistens ein Aufhängungsteil oder Gewichtsteil (24) umfaßt, welches das Mittelteil der Aufzuchtvorrichtung (10) nach unten drückt oder belastet.

16. System nach einem der vorhergehenden Ansprüche 11 bis 13 und 15, und mit einer Aufzuchtvorrichtung nach Anspruch 10, in dem die gegenüberliegenden geschlossenen Ränder (2, 3) der Aufzuchtvorrichtung (10) Versorgungsrohre (14) aufweisen, die in deren längsverlaufende Außenpassagen (7, 8) eingesetzt sind und von Aufhängungsteilen (15) eingebettet sind, die einander gegenüberliegend und im wesentlichen auf der gleichen Höhe angeordnet sind, und wobei sich der zwischenliegende Teil der Aufzuchtvorrichtung (10) in einer Hängestellung zwischen und unterhalb der Aufhängungsteile (15) befindet, und
weiter umfassend einen äußeren Kunststoffschlauch (25), der die Aufzuchtvorrichtung (10) umgibt und von einem zwischenliegenden Tragmittel (28) gehalten ist,
wobei der äußere Kunststoffschlauch an jedem Ende der Aufzuchtvorrichtung (10) geschlossen ist.

17. Verfahren nach einem der Ansprüche 1 bis 7,
**gekennzeichnet durch** Zusammenschweißen des Paars von Schichten (4, 5) entlang dem ersten Längsrand (2).

## Revendications

1. Procédé de culture hydroponique de plantes comprenant les méthodes consistant à :
- introduire un tuyau d'irrigation goutte à goutte (14) comportant des orifices de sortie (17) disposés sur sa longueur entre une paire de couches juxtaposées à plat (4, 5) de matériaux imperméables à l'eau d'un dispositif de culture de plantes (10) le long de son premier bord longitudinal (2),
- accrocher ou suspendre ce tuyau d'irrigation goutte à goutte et ce dispositif de culture sur au moins un moyen d'accrochage (15) placé à un niveau sensiblement horizontal avec le premier bord longitudinal et le tuyau disposé de façon contiguë à au moins un moyen de suspension, et la partie restante du dispositif de culture de plantes (10) accroché à ce moyen de suspension,
- placer les racines (19) d'un certain nombre de plantes (18) entre deux couches juxtaposées du dispositif de culture, les racines de chaque plante étant disposées en aval de l'un de ces orifices de sortie,
- alimenter en continu la solution nutritive par ce tuyau d'irrigation goutte à goutte et les orifices de sortie et la diriger sur les racines de chaque plante,
caractérisé par le fait d'utiliser un dispositif de culture de plantes (10) fermé sur le premier bord longitudinal (2) et comportant de petites découpes ou saignées espacées (11) à travers au moins l'une des couches (4, 5) à proximité du premier bord longitudinal fermé (2), chacune de ces saignées permettant l'introduction des racines (19) d'une plante (18) et avec la tige (20) de la plante s'étendant à travers les saignées (11),
permettant à la solution nutritive de percoler rapidement dans les racines des plantes et d'extraire et de recueillir la solution nutritive excédentaire percolée du dessous des racines pour sa recirculation et décharge, permettant ainsi de produire des conditions optimales pour les racines, y compris le maintien d'une très fine pellicule de solution nutritive percolante fraîche ayant une faible concentration de sels nutritifs et de produits de déchets sur les racines, cette pellicule étant entourée d'une atmosphère d'une humidité relative pratiquement égale à 100 % avec une teneur élevée en oxygène.

2. Procédé selon la revendication 1, caractérisé en ce que l'on utilise une solution nutritive ayant une concentration soigneusement contrôlée de substances nutritives bien au-dessous de 2 pour 1000 et en alimentant une solution nutritive dans la quantité d'au moins 0,1 l/h pour chaque plante, de préférence au moins 0,25 l/h pour chaque plante.

3. Procédé selon la revendication 1 ou 2, caractérisé en ce que l'on place une partie supérieure du dispositif de culture de plantes (10) s'inclinant proportionnellement au plan vertical contenant les moyens de suspension (15) à l'aide d'un moyen de déplacement longitudinal (55).

4. Procédé selon l'une quelconque des revendications 1-3, caractérisé en ce que l'on utilise un tubage plastique aplati (1) fermé le long du bord inférieur (3) ainsi que le long du bord supérieur (2) sauf pour l'ouverture de décharge (12) au point le plus bas du bord inférieur (3).

5. Procédé selon l'une quelconque des revendications 1-4, caractérisé en ce que l'on utilise un dispositif de culture comportant la paire de couches juxtaposées à plat (4, 5) scellées ensemble dans les lignes ou zones intermédiaires (6) espacées dans la direction longitudinale des couches et formant une série de passages transversaux (9) entre les zones (6) pour le passage de la solution nutritive et le développement des racines (19).

6. Procédé selon l'une quelconque des revendications 1-5, caractérisé en ce que l'on utilise un tubage plastique aplati (1), dont chaque bord longitudinal fermé (2, 3) est muni d'un tuyau d'irrigation goutte à goutte (14) sur sa longueur, chaque bord fermé (2, 3) et chaque tuyau étant accroché à un moyen de suspension séparé (15), la partie intermédiaire du dispositif de culture fléchissant entre ceux-ci, la solution nutritive étant amenée par chacun des tuyaux d'irrigation goutte à goutte (14) et lors de la percolation en direction du centre (C) du dispositif de culture, prélevée par une ouverture de décharge ménagée dans celui-ci.

7. Dispositif de culture (10) pour la culture hydroponique de plantes comprenant :
- une longueur enroulable (1) d'une paire de couches juxtaposées à plat (4, 5) de matériaux imperméables à l'eau formant des premier et second bords longitudinaux (2, 3),
- les deux couches (4, 5) étant reliées entre elles au moins le long du premier bord longitudinal (2) et permettant l'introduction d'un tuyau d'irrigation goutte à goutte (14) comportant des orifices de sortie (17) disposés sur sa longueur entre ces couches (4, 5) le long du premier bord longitudinal (2), ces couches (4, 5) et ce tuyau (14) permettant de plus l'accrochage sur un moyen de suspension sensiblement horizontal (15) le long du premier bord d'interliaison (2),
caractérisé par la longueur enroulable (1) des couches (4, 5) qui est fermée au niveau du premier bord d'interliaison (2), au moins l'une des deux couches (4, 5) comportant des petites saignées (11) espacées sur leur longueur et à proximité du premier bord (2), chaque saignée, destinée à l'introduction des racines (19) d'une plante (18) permet à la tige (20) de la plante (18) de la traverser, la longueur (1) étant de plus dotée d'une ouverture de décharge (12) pour la solution nutritive percolée sur son fond.

8. Dispositif de culture (10) selon la revendication 7, caractérisé par
- le tronçon (1) consistant en un tubage aplati (1) d'une pellicule plastique avec son second bord longitudinal fermé, et
- l'ouverture de décharge (12) étant ménagée au niveau du point le plus bas du second bord longitudinal fermé (3).

9. Dispositif de culture (10) selon la revendication 7 ou 8, caractérisé par les deux couches (4, 5) scellées dans des zones de scellement (6) ayant la forme de points ou de cercles ou de lignes droites ou courbes et espacées le long de la direction longitudinale des couches (4, 5), ces zones de scellement (6) laissant des voies de passage libres longitudinalement (7, 8) le long des premier et second bords (2, 3) et formant une série de voies de passage transversales successives (9) débouchant sur les deux voies de passage s'étendant longitudinalement (7, 8), ces voies de passage transversales (9) ayant une section transversale sensiblement plane.

10. Dispositif de culture (10) selon la revendication 7, et destiné à la mise en pratique du procédé de la revendication 6, caractérisé par le fait que
- deux des bords longitudinaux (2, 3) sont fermés et que la longueur (1) des deux couches (4, 5) permet l'introduction d'un tube d'irrigation goutte à goutte (14) au niveau de chaque bord (2, 3), et la suspension ou accrochage de ces tuyaux (14) sur des moyens de suspension sensiblement horizontaux (15) le long de chaque bord (2, 3),
- les deux couches (4, 5) sont scellées le long des deux rangées parallèles longitudinales (62, 63) de zones de scellement (6), chaque zone de scellement dans une rangée s'étendant entre un premier point (6') situé à une certaine distance en éloignement d'un bord fermé (2, 3) de la longueur (1), et un second point (6'') situé à une plus grande distance du bord fermé (2, 3) et à une certaine distance en éloignement de l'axe géométrique (C) du tronçon (1) et du même côté que le premier point (6'),
- les rangées (62, 63) des zones de scellement (6) laissant ainsi des voies de passage longitudinales libres (7, 8) s'étendant chacune sur la longueur d'un bord respectif des bords fermés (2, 3) et une voie de passage longitudinale centrale libre (90) s'étendant entre deux rangées parallèles (62, 63) de zones de scellement (6), ces deux rangées de zones de scellement formant de plus deux séries de voies de passage successives transversales planes (9) séparées l'une de l'autre par les zones de scellement (6) et débouchant chacune sur une voie de passage correspondante longitudinale extérieure (7, 8) et sur la voie de passage centrale longitudinale (90),
- l'ouverture de décharge (12) étant ménagée au point le plus bas de la voie de passage centrale (90).

11. Système pour la culture hydroponique de plantes comprenant
- une cuve de recueil (30) pour une solution nutritive,
- un moyen de contrôle (36) pour mesurer et ajuster en continu la teneur en sels nutritifs et autres additifs nécessaires pour la croissance des plantes et ajoutant les quantités nécessaires d'eau, de macro et microsubstances à la solution nutritive ; des pompes (32) et des tuyaux (31, 35) pour amener en continu la solution nutritive vers les plantes (18), et
- au moins une rigole (33) destinée à recueillir et à faire circuler la solution nutritive excédentaire usée à partir des plantes (18) vers la cuve de recueil (30),
caractérisé en ce que qu'il comprend de plus
- un certain nombre de dispositifs de culture (10) selon l'une quelconque des revendications 7-10,
- un nombre correspondant de tuyaux d'alimentation (14) introduits dans ceux-ci et d'une longueur au moins égale à la longueur du dispositif de culture (10) et
- un nombre correspondant de moyens de suspension (15, 24) pour accrocher le dispositif de culture (10) et chaque tuyau d'alimentation introduit (14) de façon à situer chaque dispositif de culture (10) au-dessus et transversalement à la rigole (33) avec respectivement sa voie de passage longitudinale inférieure (8) ou voie de passage centrale (90) légèrement inclinée vers le bas en direction de la rigole (33) et avec son orifice de sortie (12) juste au-dessus de la rigole.

12. Système selon la revendication 11, caractérisé en ce que les moyens de suspension (15, 24) comprennent
- au moins un élément d'accrochage par exemple une corde ou un fil (15) tendu entre au moins deux poteaux (16, 16') et facultativement des moyens de serrage (22) enserrant l'élément de suspension (15) et la partie supérieure du dispositif de culture (10), supportant ou maintenant le tuyau d'alimentation (14) en des emplacements appropriés sur toute sa longueur, fixant ainsi le dispositif de culture (10) sur l'élément de suspension (15), cet élément de suspension étant positionné à un niveau suffisant pour maintenir le fond du dispositif de culture (10) juste au-dessus du sommet de la rigole (33).

13. Système selon la revendication 12, caractérisé en ce que
- les moyens d'accrochage (15) comprennent deux fils parallèles (15), bien tendus entre deux poteaux (16, 16') et maintenus à proximité l'un de l'autre de chaque côté du dispositif de culture (10) au-dessous du tuyau d'alimentation (14) introduit dans celui-ci, et en ce que
- les moyens d'accrochage (15) comprennent de plus des moyens de serrage (22), par exemple des crochets, insérés sous les fils (15) et le tuyau d'alimentation (14) et suspendus par des fils ou cordes (23) fixés sur un moyen de montage (41) au-dessus du dispositif de culture (10),
- supportant ainsi le dispositif de culture (10) et les plantes (18) introduites dans celui-ci,
- le dessus (21) de ces plantes étant fixé aux cordes ou fils (23).

14. Système selon l'une quelconque des revendications précédentes 11-13, caractérisé par des moyens de support supplémentaires (45-48) supportant chaque dispositif de culture et empêchant chaque dispositif d'être enlevé de force de la position d'accrochage en suspension sensiblement verticale, par exemple par suite du vent, ces moyens de support comprenant au moins un élément d'accrochage (45) tendu entre les poteaux (16, 16') à un niveau juste au-dessus de la voie de passage longitudinale inférieure (8) et un certain nombre d'éléments de blocage par exemple des crochets, des brides, des courroies ou des broches (46), fixant le dispositif de culture (10) sur les éléments d'accrochage (45), ces moyens de suspension comprenant des moyens d'ancrage (47) par exemple des rubans, des filets ou des cordes ou fils à fixer sur des blocs d'ancrage (48) ou des éléments de suspension (45) fixés au-dessous du dispositif de culture.

15. Système selon la revendication 12, dans lequel les moyens d'accrochage (15, 24) comprennent au moins un élément d'accrochage ou un élément de charge (24) s'appuyant ou comprimant la partie centrale du dispositif de culture (10).

16. Système selon l'une quelconque des revendications précédentes 11-13 et 15, et comprenant un dispositif de culture selon la revendication 10,
- dans lequel les bords fermés en opposition (2, 3) du dispositif de culture (10) comportant des tuyaux d'alimentation (14) introduits dans les voies de passage longitudinales externes (7, 8) sont emboîtés dans les éléments d'accrochage (15) situés en regard l'un de l'autre et sensiblement au même niveau, et avec la partie intermédiaire contiguë du dispositif de culture (10) suspendue entre et au-dessous des éléments d'accrochage (15), et
- comprenant de plus un tubage plastique extérieur (25) entourant le dispositif de culture (10) et porté par des moyens de support intermédiaires (28),
- le tubage plastique externe étant fermé à chaque extrémité du dispositif de culture (10).

17. Procédé selon l'une quelconque des revendications 1 à 7, caractérisé par le fait de souder ensemble la paire de couches (4, 5) le long du premier bord longitudinal (2).
